# EUROPEAN PATENT SPECIFICATION

(11) **EP 3 670 295 B1**
(45) Date of publication and mention of the grant of the patent: **23.11.2022**
(21) Application number: 18214097.0
(22) Date of filing: 19.12.2018
(51) Int. Cl.: B62D 1/04, G06F 3/02, G06F 3/03, G06F 1/16, G06F 3/0346, G06F 3/01, B60K 37/00, G06F 3/16

(54) **INPUT UNIT FOR REMOTELY PROVIDING USER INPUT TO AN ELECTRONIC USER INTERFACE AND A MOTOR VEHICLE COMPRISING THE INPUT UNIT**
EINGABEEINHEIT ZUM ENTFERNTEN BEREITSTELLEN VON BENUTZEREINGABEN FÜR EINE ELEKTRONISCHE BENUTZERSCHNITTSTELLE UND KRAFTFAHRZEUG MIT DER EINGABEEINHEIT
UNITÉ D'ENTRÉE DE FOURNITURE À DISTANCE D'UNE ENTRÉE D'UTILISATEUR SUR UNE INTERFACE UTILISATEUR ÉLECTRONIQUE ET VÉHICULE À MOTEUR COMPRENANT L'UNITÉ D'ENTRÉE

(43) Date of publication of application: 24.06.2020
(73) Proprietor: AUDI AG, 85045 Ingolstadt (DE); LG Electronics Inc., Youngdungpo-gu Seoul 150-721 (KR)
(72) Inventor: CHUN, Sewon, Seocho-gu Seoul (KR); SONG, Jieun, Songpa-gu Seoul (KR); HÉLOT, Jacques, 85051 Ingolstadt (DE); MÜLLER, Ulrich, 85055 Ingolstadt (DE); KIM, Soyoung, Gangseo-gu Seoul (KR)
(74) Representative: Hofstetter, Schurack & Partner

(56) References cited:
- US-A1- 2008 225 000
- US-A1- 2016 098 097
- US-A1- 2016 299 531
- US-A1- 2016 375 924

## Description

The invention is concerned with an input unit for remotely providing user input to an electronic user interface. The invention is also concerned with a motor vehicle comprising the input device and the electronic user interface.

Input units comprising of devices such as keyboard devices or touchpads or touchscreen monitors can be used in vehicles, especially autonomous vehicles, where the driver can use the driving time to write a text message or work on documents instead of concentrating on the steering wheel. However, typically available devices such as touchpads or touch screen monitors fail to provide a comfortable solution for the driver to write a text message or edit documents while driving.

Document US 2016/0375924 A1 discloses a steering wheel for a vehicle which includes a steering wheel hub. Also included is a first portion of the steering wheel hub having an electronic display. Further included is a second portion of the steering wheel hub having a keyboard, the keyboard being in operable communication with the electronic display. However, during autonomous driving, the steering wheel is often moved out of the way making the keyboard unavailable.

Document DE 10 2015 108 871 A1 discloses a vehicle computing system which includes at least one controller configured to communicate with an attractable device. The at least one controller may be configured to receive data defining a first gesture made using the attractable wireless device. The controller may be further configured to determine a first predefined command to control a vehicle system that was previously stored in association with the first gesture. The controller may be further configured to control the vehicle system according to the first predefined command.

24.07.2018 17:43:00

Document KR 2004 0053523 A discloses a steering wheel with a keyboard in a vehicle which is provided to make the best use of the telematics system by using the keyboard, and to improve the appearance by folding and storing the keyboard, when not using. An attachment part is formed in the upper part of a hub of the steering wheel of the vehicle, and the keyboard is mounted in the attachment part. The keyboard is connected and folded by a hinge part. The hinge parts are installed at ¼ point and ¾ point of the entire length of the keyboard, and the keyboard is folded around the hinge parts. The attachment part of the keyboard is recessed inward to restrict the folded keyboard from being protruded out of the steering wheel. Lowering of the appearance is prevented by forming the folded outside of the keyboard with the same material as the hub of the steering wheel. However, providing an extra keyboard in addition to other input devices consumes valuable space.

US 2016/098097 A1 describes a portable keyboard including a polygonal pillar-shaped main body, having a battery embedded therein; a key assembly with a plurality of key arrangements connected to the main body; and a connecting member formed to extend down to the bottom of the key assembly while connecting the key assembly to the main body.

It is an object of the present invention to provide an input unit for remotely providing user input to an electronic user interface in a vehicle.

The object is accomplished by the subject matter of the independent claims.

Advantageous developments with convenient and non-trivial further embodiments of the invention are specified in the following description, the dependent claims and the figures.

The invention provides an input unit for remotely providing a user input to an electronic user interface. The electronic user interface can be for example, a display screen and/or a music system and/or a central electronic unit and/or an infotainment system. The input unit is part of the vehicle.

The input unit comprises a keyboard device. The keyboard device comprises a portable core element, which can comprise several sensors and/or at least one battery for the keyboard and/or at least one socket and/or at least one plug which can enable an energy storage to be electrically charged, when the at least one socket and/or the at least one plug are connected or plugged to a charging unit. The keyboard device further comprises of a base plate arrangement that is attached to and foldable relative to the portable core element between a first state and a second state. The base plate arrangement can be a system and/or an arrangement of a plurality of plates, such that each plate is attached to the other in a foldable manner relative to the core element between the first state and the second state. The number of plates can be two, three, four or more than four.

In the first state of the base plate arrangement, the plurality of the plates may be arranged in an aligned manner, such that the base plate arrangement forms a shape of a flat plate. Whereas in the second state of the base plate arrangement, the multitude of plates of the base plate arrangement are folded or wrapped around the portable core element, such that keyboard device obtains a shape of a pointing stick.

The keyboard device further comprises a plurality of key structures located on a first side of the base plate arrangement. The key structures preferably constitute of keys of a key board. In other words the key structures constitute of keys which are designed to enter an at least one specific alphabet and/or number and/or symbol. The plurality of key structures are designed to detect a first user input that is provided by the application of pressure and wirelessly send a first user input signal to the electronic user interface. The first user input signal provides information about which key structure has been pressed or which of the key structures have been pressed in succession. In other words the keyboard device is in electronic communication with the electronic user interface such that the inputs selected on the keyboard device can be reflected on the electronic display. For example, when an autonomous vehicle steering system is activated, a driver of the autonomous vehicle does not need the steering wheel for vehicle control. In this situation the driver can take the keyboard device out of a docking station and unroll or unfold the base plate arrangement, such that the plurality of key structures are displayed or uncovered. The driver can use the keyboard device to write a text message or edit a document or generally enter text by pressing the corresponding key structures of the keyboard device. Hence, the autonomous vehicle can be used as a workspace for the driver while driving.

According to the invention, the keyboard device with the base plate arrangement in the second state is designed to function as a wireless pointer tool to remotely send a second user input signal to at least one predefined selectable element. The predefined selectable element can be a part of the input unit such as the electronic user interface in the vehicle. Further, the second user input signal comprises at least one of an activation signal and/or a functionality selection signal. Hence, in the second state of the base plate arrangement the keyboard device is designed to function as a wireless pointer tool. This is of advantage because the driver of the autonomous vehicle can use the keyboard device as a wireless pointer tool to remotely send the second user input to at least one predefined selectable element. For example, the user can point the keyboard device to the electronic display unit of the vehicle, which can be a part of the input unit, and send an activation signal, this enables an electronic communication between the keyboard device and the electronic display unit. In other words the activation signal enables a motion of an electronic communication, e.g., a remote cursor on the electronic display unit, to be corresponding to the motion of the keyboard device with the base plate arrangement in the second state or motion of the hand of a user holding and moving the keyboard device with the base plate arrangement in the second state. For example, the keyboard device can be used to operate as a remote cursor and/or be used to locate a selection option on the electronic display unit, for example, the selection option can be switching on of an electronic unit, e.g., a radio system. In this case, the user or the driver can move the remote cursor on the display by moving the keyboard device. Once the cursor moves onto the selection option or button, for example, a selection option or button or symbol corresponding to the switching on of the radio system on the electronic display unit, the user can send a functionality selection signal.

The keyboard device with the base plate arrangement in the second state determines a position and/or spatial orientation by means of a sensor and provides information about the position and/or spatial orientation of the keyboard device in the second user input signal, and wherein the portable core element comprises the sensor.

This is of advantage because this enables the keyboard device to be used as a wireless pointer tool. On the basis of the information about the position and/or spatial orientation of the keyboard device in the second user input signal, the corresponding selectable element, to which the user points by means of the keyboard device can be identified. Furthermore, the functionality selection signal directed to the corresponding selectable element can be interpreted by the central electronic unit on the basis of the information about the position and/or spatial orientation of the keyboard device in the second user input signal.

According to the invention, the input unit comprises a tracking unit that is designed to detect a relative spatial position and/or orientation of the keyboard device with respect to the tracking unit. The tracking unit is located separate from the keyboard device. The tracking unit can be for example a time-of-flight camera and/or an infrared camera and/or a stereo camera and/or an array of antennas. This results in a calculation of the appropriate spatial position and/or orientation of the keyboard device with respect to the tracking unit, which in turn is used to interpret the appropriate second user input signal by the corresponding selectable element or the central electronic unit. Based on the calculation of the appropriate spatial position and/or orientation of the keyboard device with respect to the tracking unit, the tracking unit is configured to interpret if the keyboard device is directed to a selectable element or the central electronic unit in the vehicle or to a location outside the vehicle, e.g., a parking space of a parking place. This is of advantage, because in cases, such as, for example, if the keyboard device is directed towards a location outside the vehicle, e.g., a parking space of a parking place, then the tracking unit can send a tracking signal to the central electronic unit instead.

The tracking signal comprises the information about the relative spatial position and/or orientation of the keyboard device with respect to the tracking unit. Based on the tracking signal to the central electronic unit, the second user input signal e.g. a voice signal to park the vehicle in the vehicle space) which in this case is directed towards the parking space can be redirected to the central electronic unit. Hence, based on the tracking signal and the second user input signal, the vehicle can be driven autonomously to the parking space and parked accordingly.

The invention also comprises embodiments that provide features which afford additional technical advantages.

In one embodiment, the base plate arrangement in the second state is wrapped around the portable core element. The first side of the base plate arrangement can be inside, that is facing the portable core element, such that the key structures on the first side of the base plate arrangement are covered. It enables the keyboard to obtain a shape of a pointing stick. This can be ergonomically desirable to use for a user such as the driver of the vehicle.

In one embodiment, the second side of the base plate arrangement opposite to the first side comprises at least one selection element which is designed to trigger the second user input signal. This enables the user to point the keyboard device towards a particular predefined selectable element. For example, if the user wishes to ventilate the vehicle during driving, then the user can hold the keyboard with the base plate arrangement in the second state, which can be form of a pointing stick, and point towards a vehicle door, such as one of the vehicle door on the rear side. The user can point the keyboard device towards a windscreen of that particular door and press the at least one selection element, on the second side of the base plate arrangement to the second user input signal. The second user input signal in this case, can be the to open the windscreen of that particular door of the vehicle. It is further thinkable that the at least one selection element can be in form of a press button, which can be pressed in order to send the second user input signal.

In one embodiment, the keyboard device can comprise at least one voice input sensor, wherein the keyboard device is designed to generate the second user input signal at least partially on the basis of a sensor signal of the voice input signal. The at least one voice input sensor can be in form a microphone. The user can then provide a voice input, for example "turn on the radio". In this case, the at least one voice input sensor captures the voice input from the user and transmits a voice input signal to a central electronic unit of the vehicle. The central electronic unit can convert the voice input into a machine input signal and sends an activation signal to a radio system of the vehicle accordingly. This is of advantage because this enables the user to provide use keyboard device as a voice user interface to perform required activities in hands free situations, such as driving where the driver's hands are located on the steering wheel.

In one embodiment, the keyboard device can comprise at least one motion detection sensor, wherein the keyboard device is designed to generate the second user input signal at least partially on the basis of a sensor of the motion detection sensor. The second user input signal can thus be based on 3D dynamic gesture, e.g., waving of the key board device with the base plate arrangement in the second state. For example, the user can use the keyboard device with the base plate arrangement in the second state and point to a music system of in the vehicle. The user can then send the second user input signal comprising an activation signal, which enables the switching on of the music system to hear a first song. The user can further select a preferred song by means of the motion of the keyboard. For example, moving the keyboard to a right hand side and pressing the selection element can enable the selection of a next song relative to the first song. Furthermore, the user can move the keyboard to a left hand side and press the selection element, which could enable the selection of the first song. Furthermore, the user can move the keyboard in an upward direction and press the selection element, which could enable an increase in the sound volume. Similarly, the user can move the keyboard in a downward direction and press the selection element, which could enable a decrease in the sound volume. This is of advantage because it enables an increase in comfort for the user in order to perform different operations by using the gestures of motion holding the keyboard device.

In another embodiment, the input unit comprises a docking station, wherein the docking station is designed to mechanically support the keyboard device with the base plate arrangement in the second state. The docking station can be for example in form of an orthogonal hollow structure with an opening and located beside the steering wheel of the vehicle. The keyboard device with the base plate arrangement in the second state can be inserted through the opening into the orthogonal hollow structure, when the keyboard device is not in use. This ensures a mechanical support to the keyboard device and also provides protection to the keyboard device from wear in case of occasional jerks during the driving of the vehicle.

In one embodiment, the docking station is designed to electrically charge the energy storage of the keyboard device by induction and/or conduction. This is of advantage because this ensures an uninterrupted and/or desired functionality of the keyboard device in the first state as well as in the second state as a wireless pointer tool.

The invention further includes a motor vehicle comprising the electronic user interface and input unit for remotely providing input to the said electronic user interface.

The invention also comprises the various combinations of the features of the described embodiments, if not stated otherwise.

In the following an exemplary implementation of the invention is described.

The figures show:
- Fig. 1: a schematic illustration of an embodiment of an input unit;
- Fig. 2: a schematic illustration of another embodiment of the input unit; and
- Fig. 3: a schematic illustration of another embodiment of the input unit.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures elements that provide the same function are marked with identical reference signs.

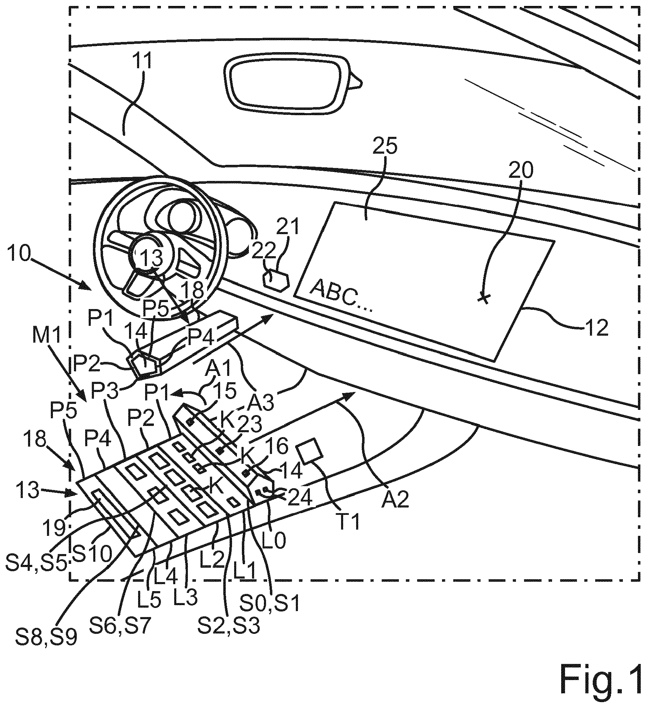

Fig. 1 shows a schematic illustration of an embodiment of an input unit 10. The input unit 10 is incorporated in a vehicle 11 that may be a passenger vehicle. The vehicle 11 may comprise a driver assistance system (not shown in the figure), which can provide, for example, an auto-pilot functionality. In other words, the driver assistance system may drive the vehicle 11 autonomously or fully automatically. The input unit 10 is designed for providing a user input to an electronic user interface 12. The input unit 10 comprises a keyboard device 13. The keyboard device 13 comprises a portable core element 14 which can comprise a plurality of sensors, for example a voice input sensor 15 and/or a motion detection sensor 16. The voice input sensor 15 can be a microphone whereas the motion detection sensor 16 can be an acceleration sensor and/or a passive infrared sensor and/or a microwave sensor and/or a ultrasonic sensor.

The keyboard device 13 comprises a base plate arrangement 18. The base plate arrangement 18 can comprise of a plurality of plates P1, P2, P3, P4, P5. The plates P1, P2, P3, P4, P5 can be connected to each other serially such that an edge of one plate is connected to an edge of a neighboring plate by means of a foldable material. As shown in Fig. 1, an edge S1 of the plate P1 can connected to an edge S0 of the portable core element 14 by means of hinge, which is not shown in the figures. An edge S2 of the plate P1 can be connected to an edge S3 of the plate P2, such that the plates P1 and P2 are rotatable relative to each other about the edges S2 and/or S3, wherein the edges S2 and S3 remain hinged or fixed relative to each other.

Similarly an edge S4 of plate P2 and an edge S5 of plate P3, an edge S6 of plate P3 and an edge S7 of plate P4, an edge S8 of plate P4 and an edge S9 of plate P5 can be connected to each other such the respective plates P2, P3, P4 and P5 are rotatable relative to each other about their respective edges S2, S3, S4, S5, S6, S7, S8 and/or S9. The plates P1, P2, P3, P4 and P5 of the base plate arrangement 18 can be arranged in such a manner that once the lateral edges L0, L1, L2, L3, L4 and L5 of the portable core element 14 and the corresponding plates P1, P2, P3, P4 and P5 are aligned relative to each other, then the plates P1, P2, P3, P4 and P5 cannot be rotated further. In other words, the plate P2 can be rotated up to a maximum angle of 180 degrees about the edge S2 and/or S3, such that when the edges L1 and L2 are aligned, then the plate P2 cannot be rotated any further in that direction. The plates P3, P4 and P5 can be designed similar to P2, such that they can be rotated up to a maximum angle of 180 degrees about the corresponding edges S2 and/or S3, edges S4 and/or S5, edges S6 and/or S7 and edges S8 and/or S9. However, the plate P1 can be rotated up to a maximum angle of 90 about the edge S0 and/or S1 such that the edges L0 and L1 are aligned with respective to each other. Such an arrangement of the plates P1, P2, P3, P4 and P5 ensures that the base plate arrangement 18 can be wrapped around the portable core element 14. Furthermore, the base plate arrangement 18 can be unwrapped about the edge S0 of the portable core element 14 along a direction an arrow A1, such that the base plate arrangement 18 can form a flat surface.

A plurality of key structures K are located a first side B1 of the base plate arrangement 18. For the sake of understandability and not all the key structures K are shown and/or marked in the Fig. 1. The plurality of key structures K are designed to detect a first user input that is provided by the application of pressure. In other words, a user can press a respective key structure and on the application of pressure, the respective key structure K gets pressed and the keyboard device 13 can send a first user input signal T1 wirelessly to the electronic user interface 12, which is shown by the arrow A2. The electronic user interface 12 can receive the first user input signal and process the signal by means of a processor, not shown in the figures, and can display the first user input signal in form of a text, for example "ABC...", on a display screen 25 of the electronic user interface 12. The electronic user interface 12 can be in the form of an electronic display similar to a computer monitor. The key structures K can be spring loaded such that it automatically returns to its original position when a finger that has depressed the respective key structure K is released therefrom. Thus, the keyboard device 13 can function as a computer-keyboard. In the embodiment shown in Fig. 1, the plates P1, P2, P3 and P4 comprise the key structures K, whereas the plate P5 comprises a touchpad 19. The user can use the touchpad 19 to move a cursor 20 on the electronic user interface 12 or the electronic display.

Hence, in order to use the keyboard device 13 to type a message or to work, the user can unwrap place the keyboard device at an ergonomically suitable orientation and unwrap or unfold the base plate arrangement 18 relative to the portable core element 14 along the direction P1. This state of the base plate arrangement 18 can be referred to as a first state M1. The user can then use the keyboard device 13 with the base plate arrangement 18 in the first state M1 to type a message on the electronic user interface 12 and/or work.

After the usage of the keyboard device 13, the base plate arrangement 18 can be folded or wrapped, e.g. by a user, relative to the portable core element 14 from the first state M1 to a second state M2. In the second state the plates P1, P2, P3, P4 and P5 of the base plate arrangement 18 can be wrapped around the portable core element 14, such that the keyboard device 13 can take a shape of a pointing stick. The plates P1, P2, P3, P4 and P5 can comprise of magnetic elements or material, such that the plates P1, P2, P3, P4 and P5 of the base plate arrangement 18 in the second state M2 can remain intact or attached to the portable core element 14.

The input unit 10 further comprises a docking station 21. The docking station can be for example in form of an orthogonal hollow structure, not shown in the figures, with an opening 22. After the usage of the keyboard device 13, the user can move the keyboard device 13 with the base plate arrangement 18 in the second state M2 towards the opening 22. The user can then insert the keyboard device into the docking station 21 through the opening 22, as shown by an arrow A3. This ensures a mechanical support to the keyboard device 13 and also provides protection to the keyboard device 13 from wear in case of occasional jerks during the driving of the vehicle 11.

The portable core element 14 can comprise an energy storage 23 and a plug 24. When the keyboard device 13 is inserted into the docking station 21, the energy storage 23 can be electrically charged from the docking station 21 through the plug 24 by induction and/or conduction.

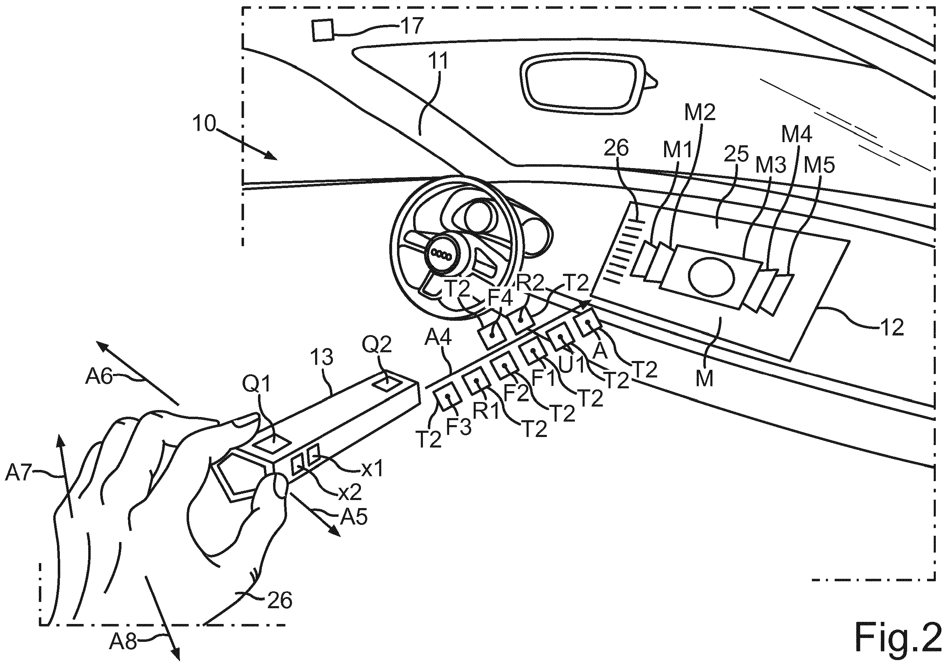

Fig. 2 shows a schematic illustration of an embodiment of the input unit 10.

The keyboard device 13 with the base plate arrangement 18 in the second state M2 is designed to function as a wireless pointer tool. In the second state M2 of the base plate arrangement 18, the user uses the keyboard device 13 as a wireless pointer tool to remotely send a second user input signal T2 to at least one predefined selectable element of the electronic user interface 12, as shown by an arrow P4. The second input signal T2 comprises at least one of an activation signal A and/or a functionality selection signal F1, F2, F3, F4.

In addition to the voice input sensor 15 and/or the motion detection sensor 16, the portable core element 14 of the keyboard device 13 further comprises a first sensor Q1 and a second sensor Q2. The first sensor Q1 and the second sensor Q2 determine a position and/or orientation of the keyboard device 13 and provide information about the position and/or spatial orientation of the keyboard device 13 in form of a position signal U1 in the second user input signal T2.

The user can hold the keyboard device 13 with the base plate arrangement 18 in the second state M2 with his hand 26 and point towards the electronic user interface 12. The user can press a first selection element X1 on a second side B2 of the base plate arrangement 18 to trigger and send an activation signal A in the second input signal T2 wirelessly to the electronic user interface 12. Furthermore a second input signal T2 with the position signal U1 can be also sent to the electronic user interface 12. The electronic user interface 12 receives the activation signal A and the position signal U1 and displays contents on the electronic display screen 25 of the electronic user interface 12. The connection of the keyboard device 13 to the electronic user interface 12 can be shown by means of a cursor 20. The user can move the cursor 20 on the electronic display screen 25 to music play list symbol and press a second selection button X2 on a second side B2 of the base plate arrangement 18. Hence, a second user input signal T2 with a functionality selection signal F1 is sent wirelessly to the electronic user interface 12. Thus, a music play list M is displayed on the electronic display screen 25. The music play list M can display a part of a list of names of songs M1, M2, M3, M4 and M5. In Fig. 2, the name of the song M3 is displayed as a selectable song in middle of the display screen 25. The user can select this song M3 by pressing the section button X2 and there by sending a second user input signal T2 with a functionality selection signal F2 wirelessly to the electronic user interface 12.

However, if the user prefers to select the song M2 instead of the song M3, then the user can move and/or rotate his hand 26 holding the keyboard device 13 towards the right, as shown by an arrow A5, and press the selection button X2. Due to the presence of the motion detection sensor 16, a second user input signal T2 with motion signal R1 can be sent to the electronic user interface 12. The electronic user interface 12 can receive the motion signal R1, which provides information of the motion of the hand 26 relative to the original position and/or orientation of the hand 26 according to the position signal U1. The processor processes the motion signal R1 and the position signal U1, and identifies the desired song M2 by the user. The processor moves the name of the song M2 in the middle of the electronic display screen 25 of the electronic user interface 12. Hence, by pressing the selection button X2, the user can send a second user input signal T2 with a functionality selection signal F3, in order to play the song M2.

Similarly, if the user prefers to select the song M4 instead of the song M3, then the user can move and/or rotate his hand 26 holding the keyboard device 13 towards the left, as shown by an arrow A6, and press the selection button X2. Due to the presence of the motion detection sensor 16, a second user input signal T2 with motion signal R2 can be sent to the electronic user interface 12. The electronic user interface 12 can the motion signal R2, which provides information of the motion of the hand 26 relative to the original position and/or orientation of the hand 26 according to the position signal U1. The processor processes the motion signal R2 and the position signal U1, and identifies the desired song M4 by the user. The processor moves the name of the song M4 in the middle of the electronic display screen 25 of the electronic user interface 12. Hence, by pressing the selection button X2, the user can send a second user input signal T2 with a functionality selection signal F4, in order to play the song M2.

Furthermore, if the user prefers to increase the volume of the selected song M3, then the user can move and/or rotate his hand 26 holding the keyboard device 13 towards upward direction, as shown by an arrow A7, and press the selection button X2. Due to the presence of the motion detection sensor 16, a second user input signal T2 with motion signal R3 can be sent to the electronic user interface 12. The electronic user interface 12 can the motion signal R3, which provides information of the motion of the hand 26 relative to the original position and/or orientation of the hand 26 according to the position signal U1. The processor processes the motion signal R3 and the position signal U1, and identifies the desired action by the user, that is to increase the volume of the selected song M3. The processor displays a volume bar 28 on the electronic display screen 25 of the electronic user interface 12. Hence, by pressing the selection button X2, the user can send a second user input signal T2 with a functionality selection signal F5, in order to increase the volume of the selected song M3. Similarly, in order to decrease the volume of the selected song M2, the user can move and/or rotate his hand 26 holding the keyboard device 13 towards upward direction, as shown by an arrow A8, and press the selection button X2.

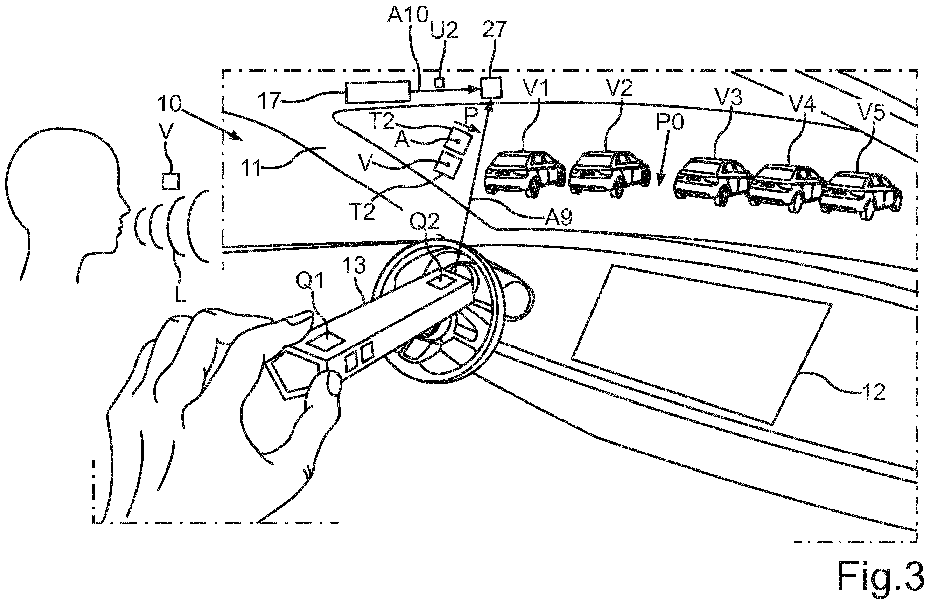

Fig. 3 shows a schematic illustration of an embodiment of the input unit 10.

In the second state M2 of the base plate arrangement 18, the user uses the keyboard device 13 as a wireless pointer tool and can point towards a location, for example a parking space P0 in a parking place P with vehicles V1, V2, V3, V4 and V5. The user can provide a voice input signal V, shown by marked lines L, for example "drive to the parking space". The input device further comprises a tracking unit 17, which is designed to detect a relative spatial position and/or orientation of the keyboard device 13 with respect to the tracking unit 17.

The user can press a first selection element X1 on a second side B2 of the base plate arrangement 18 to trigger an activation signal A in a second input signal T2. Due to the voice input signal V, the second input signal T2 with the activation signal A and the voice input signal V, is sent or directed to a central electronic unit 27. This is shown by an arrow A9.

The&tracking unit 17 detects a relative spatial position and/or orientation of the keyboard device 13 with respect to the tracking unit 17 by detecting the relative positions of the first sensor Q1 and the second sensor Q2 . This can be achieved by means of, for example time-of-flight camera. The tracking unit 17 can send a tracking signal U2 to the central electronic unit 27. This is shown by an arrow A10. The tracking signal U2 comprises the information about the relative spatial position and/or orientation of the keyboard device 13 with respect to the tracking unit 17. Based on the tracking signal U2 and the second user input signal with voice input signal V, the central electronic unit can locate the parking space P0 and drive the vehicle 11 to the parking space P0 autonomously.

Overall, the examples show how a user input may be provided to an electronic user interface remotely by means of an input unit.

## Claims

1. Input unit (10) in a motor vehicle (11) for remotely providing user input to an electronic user interface (12) in the motor vehicle (11), the input unit (10) comprising a keyboard device (13),
wherein the keyboard device (13) comprising:
- a portable core element (14);
- a base plate arrangement (18) that is attached to the portable core element (14) and foldable relative to the portable core element (14) between a first state (M1) and a second state (M2); and
- a plurality of key structures (K) located on a first side (B1) of the base plate arrangement (18), wherein the plurality of key structures (K) are designed to detect a first user input that is provided by the application of pressure on a respective key structure (K) and wirelessly send a first user input signal (T1) to the electronic user interface (12), the first user input signal (T1) providing information on which key structure (K) has been pressed;
the keyboard device (13) with the base plate arrangement (18) in the second state (M2) is designed to function as a wireless pointer tool to remotely send a second user input signal (T2) to at least one predefined selectable element of the electronic user interface (12), wherein the second user input signal (T2) comprises at least one of an activation signal (A) for enabling an electronic communication between the keyboard device and an electronic display unit of the electronic user interface (12), and/or a functionality selection signal (F1, F2, F3, F4); and wherein the keyboard device (13) with the base plate arrangement (18) in the second state (M2) determines a position and/or spatial orientation by means of a sensor (Q1, Q2) and provides information about the position and/or spatial orientation of the keyboard device in the second user input signal (T2), wherein the portable core element comprises the sensor (Q1, Q2);
**characterized in that**
the input unit (10) further comprises a tracking unit (17) that is designed to detect a relative spatial position and/or orientation of the keyboard device (13) with respect to the tracking unit (17),
wherein the tracking unit (17) is located separate from the keyboard device (13); and
based on a calculation of the detected relative spatial position and/or orientation of the keyboard device (13) with respect to the tracking unit (17), the tracking unit (17) is configured to interpret whether the keyboard device (13) is directed to the at least one predefined selectable element of the electronic user interface (12) in the motor vehicle (11), a central electronic unit (27) in the motor vehicle (11) or a location outside the motor vehicle (11).

2. Input unit (10) according to claim 1, wherein the base plate arrangement (18) in the second state (M2) is wrapped around the portable core element (14).

3. Input unit (10) according to any one of the preceding claims, wherein a second side (B2) of the base plate arrangement (18) opposite of the first side (B1) comprises at least one selection element (X1, X2) which is designed to trigger the second user input signal (T2).

4. Input unit (10) according to any one of the preceding claims, wherein the keyboard device (13) comprises at least one voice input sensor (15), wherein the keyboard device (13) is designed to generate the second user input signal (T2) at least partially on the basis of a sensor signal (V) of the voice input sensor (15).

5. Input unit (10) according to any one of the preceding claims, wherein the keyboard device (13) comprises at least one motion detection sensor (16), wherein the keyboard device (13) is designed to generate the second user input signal (T2) at least partially on the basis of a motion signal (R1, R2, R3) of the motion detection sensor (16).

6. Input unit (10) according to any of the preceding claims, wherein the input unit comprises a docking station (21), wherein the docking station (21) is designed to mechanically support the keyboard device (13) with the base plate arrangement (18) in the second state (M2).

7. Input unit (10) according to claim 6, wherein the docking station (21) is designed to electrically charge an energy storage (23) of the keyboard device (13) by induction and/or conduction.

8. Motor vehicle (11) according to any of the preceding claims comprising the electronic user interface (12) and the input unit (10) according to any one of the preceding claims.

## Patentansprüche

1. Eingabeeinheit (10) in einem Kraftfahrzeug (11) zum entfernten Bereitstellen einer Benutzereingabe in eine elektronische Benutzerschnittstelle (12) im Kraftfahrzeug (11), wobei die Eingabeeinheit (10) eine Tastaturvorrichtung (13) umfasst,
wobei die Tastaturvorrichtung (13) umfasst:
- ein tragbares Kernelement (14);
- eine Basisplattenanordnung (18), die am tragbaren Kernelement (14) befestigt wird und relativ zum tragbaren Kernelement (14) zwischen einem ersten Zustand (M1) und einem zweiten Zustand (M2) faltbar ist; und
- eine Vielzahl von Tastenstrukturen (K), die auf einer ersten Seite (B1) der Basisplattenanordnung (18) angeordnet ist, wobei die Vielzahl von Tastenstrukturen (K) dazu ausgelegt ist, eine erste Benutzereingabe zu detektieren, die durch Aufbringen von Druck auf eine jeweilige Tastenstruktur (K) bereitgestellt wird, und ein erstes Benutzereingabesignal (T1) drahtlos zur elektronischen Benutzerschnittstelle (12) zu senden, wobei das erste Benutzereingabesignal (T1) Informationen bereitstellt, auf welche Tastenstruktur (K) gedrückt wurde;
die Tastaturvorrichtung (13) mit der Basisplattenanordnung (18) im zweiten Zustand (M2) dazu ausgelegt ist, als drahtloses Zeigerwerkzeug zu fungieren, um entfernt ein zweites Benutzereingabesignal (T2) zu mindestens einem vordefinierten auswählbaren Element der elektronischen Benutzerschnittstelle (12) zu senden, wobei das zweite Benutzereingabesignal (T2) mindestens eines von einem Aktivierungssignal (A) zum Ermöglichen einer elektronischen Kommunikation zwischen der Tastaturvorrichtung und einer elektronischen Anzeigeeinheit der elektronischen Benutzerschnittstelle (12) und/oder einem Funktionalitätsauswahlsignal (F1, F2, F3, F4) umfasst; und wobei die Tastaturvorrichtung (13) mit der Basisplattenanordnung (18) im zweiten Zustand (M2) eine Position und/oder räumliche Orientierung mittels eines Sensors (Q1, Q2) bestimmt und Informationen über die Position und/oder räumliche Orientierung der Tastaturvorrichtung im zweiten Benutzereingabesignal (T2) bereitstellt, wobei das tragbare Kernelement den Sensor (Q1, Q2) umfasst;
**dadurch gekennzeichnet, dass**
die Eingabeeinheit (10) ferner eine Verfolgungseinheit (17) umfasst, die dazu ausgelegt ist, eine relative räumliche Position und/oder Orientierung der Tastaturvorrichtung (13) mit Bezug auf die Verfolgungseinheit (17) zu detektieren,
wobei die Verfolgungseinheit (17) separat von der Tastaturvorrichtung (13) angeordnet ist; und auf der Basis einer Berechnung der detektierten relativen räumlichen Position und/oder Orientierung der Tastaturvorrichtung (13) mit Bezug auf die Verfolgungseinheit (17) die Verfolgungseinheit (17) dazu eingerichtet ist, zu interpretieren, ob die Tastaturvorrichtung (13) auf das mindestens eine vordefinierte auswählbare Element der elektronischen Benutzerschnittstelle (12) im Kraftfahrzeug (11), eine zentrale elektronische Einheit (27) im Kraftfahrzeug (11) oder einen Ort außerhalb des Kraftfahrzeugs (11) gerichtet wird.

2. Eingabeeinheit (10) nach Anspruch 1, wobei die Basisplattenanordnung (18) im zweiten Zustand (M2) um das tragbare Kernelement (14) gewickelt ist.

3. Eingabeeinheit (10) nach einem der vorangehenden Ansprüche, wobei eine zur ersten Seite (B1) entgegengesetzte zweite Seite (B2) der Basisplattenanordnung (18) mindestens ein Auswahlelement (X1, X2) umfasst, das dazu ausgelegt ist, das zweite Benutzereingabesignal (T2) auszulösen.

4. Eingabeeinheit (10) nach einem der vorangehenden Ansprüche, wobei die Tastaturvorrichtung (13) mindestens einen Spracheingabesensor (15) umfasst, wobei die Tastaturvorrichtung (13) dazu ausgelegt ist, das zweite Benutzereingabesignal (T2) zumindest teilweise auf der Basis eines Sensorsignals (V) des Spracheingabesensors (15) zu erzeugen.

5. Eingabeeinheit (10) nach einem der vorangehenden Ansprüche, wobei die Tastaturvorrichtung (13) mindestens einen Bewegungsdetektionssensor (16) umfasst, wobei die Tastaturvorrichtung (13) dazu ausgelegt ist, das zweite Benutzereingabesignal (T2) zumindest teilweise auf der Basis eines Bewegungssignals (R1, R2, R3) des Bewegungsdetektionssensors (16) zu erzeugen.

6. Eingabeeinheit (10) nach einem der vorangehenden Ansprüche, wobei die Eingabeeinheit eine Andockstation (21) umfasst, wobei die Andockstation (21) dazu ausgelegt ist, die Tastaturvorrichtung (13) mit der Basisplattenanordnung (18) im zweiten Zustand (M2) mechanisch abzustützen.

7. Eingabeeinheit (10) nach Anspruch 6, wobei die Andockstation (21) dazu ausgelegt ist, einen Energiespeicher (23) der Tastaturvorrichtung (13) durch Induktion und/oder Leitung elektrisch aufzuladen.

8. Kraftfahrzeug (11) nach einem der vorangehenden Ansprüche mit der elektronischen Benutzerschnittstelle (12) und der Eingabeeinheit (10) nach einem der vorangehenden Ansprüche.

## Revendications

1. Unité d'entrée (10) dans un véhicule à moteur (11) pour fournir à distance une entrée d'utilisateur à une interface utilisateur électronique (12) dans le véhicule à moteur (11), l'unité d'entrée (10) comportant un dispositif de clavier (13),
le dispositif de clavier (13) comportant :
- un élément noyau portatif (14) ;
- un agencement de plaques de base (18) qui est fixé à l'élément noyau portatif (14) et pliable par rapport à l'élément noyau portatif (14) entre un premier état (M1) et un second état (M2) ; et
- une pluralité de structures de touches (K) situées sur un premier côté (B1) de l'agencement de plaques de base (18), les structures de la pluralité de structures de touches (K) étant conçues pour détecter une première entrée d'utilisateur qui est fournie par l'application d'une pression sur une structure de touche (K) respective et envoyer de manière sans fil un premier signal d'entrée d'utilisateur (T1) à l'interface utilisateur électronique (12), le premier signal d'entré d'utilisateur (T1) fournissant des informations sur la structure de touche (K) qui a été pressée ;
le dispositif de clavier (13) avec l'agencement de plaques de base (18) dans le second état (M2) est conçu pour fonctionner comme un outil de pointeur sans fil pour envoyer à distance un second signal d'entrée d'utilisateur (T2) à au moins un élément sélectionnable prédéfini de l'interface utilisateur électronique (12), le second signal d'entrée d'utilisateur (T2) comportant au moins un signal parmi un signal d'activation (A) pour permettre une communication électronique entre le dispositif de clavier et une unité d'affichage électronique de l'interface utilisateur électronique (12), et/ou un signal de sélection de fonctionnalité (F1, F2, F3, F4) ; et le dispositif de clavier (13) avec l'agencement de plaques de base (18) dans le second état (M2) déterminant une position et/ou une orientation spatiale au moyen d'un capteur (Q1, Q2) et fournissant des informations sur la position et/ou l'orientation spatiale du dispositif de clavier dans le second signal d'entrée d'utilisateur (T2), l'élément noyau portatif comportant le capteur (Q1, Q2) ;
**caractérisée en ce que**
l'unité d'entrée (10) comporte en outre une unité de suivi (17) qui est conçue pour détecter une position et/ou une orientation spatiale relative du dispositif de clavier (13) par rapport à l'unité de suivi (17), l'unité de suivi (17) étant située à l'écart du dispositif de clavier (13) ; et sur la base d'un calcul de la position et/ou de l'orientation spatiale relative détectée du dispositif de clavier (13) par rapport à l'unité de suivi (17), l'unité de suivi (10) est configurée pour interpréter si le dispositif de clavier (13) est dirigé vers le au moins un élément sélectionnable prédéfini de l'interface utilisateur électronique (12) dans le véhicule à moteur (11), une unité électronique centrale (27) dans le véhicule à moteur (11) ou un emplacement à l'extérieur du véhicule à moteur (11).

2. Unité d'entrée (10) selon la revendication 1, dans laquelle l'agencement de plaques de base (18) dans le second état (M2) est enveloppé autour de l'élément noyau portatif (14).

3. Unité d'entrée (10) selon l'une quelconque des revendications précédentes, dans laquelle un second côté (B2) de l'agencement de plaques de base (18) opposé au premier côté (B1) comporte au moins un élément de sélection (X1, X2) qui est conçu pour déclencher le second signal d'entrée d'utilisateur (T2).

4. Unité d'entrée (10) selon l'une quelconque des revendications précédentes, dans laquelle le dispositif de clavier (13) comporte au moins un capteur d'entrée vocale (15), le dispositif de clavier (13) étant conçu pour générer le second signal d'entrée d'utilisateur (T2) au moins en partie sur la base d'un signal de capteur (V) du capteur d'entrée vocale (15).

5. Unité d'entrée (10) selon l'une quelconque des revendications précédentes, dans laquelle le dispositif de clavier (13) comporte au moins un capteur de détection de mouvement (16), le dispositif de clavier (13) étant conçu pour générer le second signal d'entrée d'utilisateur (T2) au moins en partie sur la base d'un signal de mouvement (R1, R2, R3) du capteur de détection de mouvement (16).

6. Unité d'entrée (10) selon l'une quelconque des revendications précédentes, dans laquelle l'unité d'entrée comporte une station d'accueil (21), la station d'accueil (21) étant conçue pour supporter mécaniquement le dispositif de clavier (13) avec l'agencement de plaques de base (18) dans le second état (M2).

7. Unité d'entrée (10) selon la revendication 6, dans laquelle la station d'accueil (21) est conçue pour charger électriquement un dispositif de stockage d'énergie (23) du dispositif de clavier (13) par induction et/ou conduction.

8. Véhicule à moteur (11) selon l'une quelconque des revendications précédentes comportant l'interface utilisateur électronique (12) et l'unité d'entrée (10) selon l'une quelconque des revendications précédentes.
